# EUROPEAN PATENT SPECIFICATION

(11) **EP 1 765 651 B1**
(45) Date of publication and mention of the grant of the patent: **21.12.2011**
(21) Application number: 05748017.0
(22) Date of filing: 27.05.2005
(51) Int. Cl.: B60T 15/02, B60T 15/36, G05D 16/00, G05B 1/04, B60T 10/02

(54) **A METHOD AND A DEVICE FOR CONTROLLING A CONTROL PRESSURE**
VERFAHREN UND VORRICHTUNG ZUM STEUERN EINES STEUERDRUCKS
PROCEDE ET DISPOSITIF PERMETTANT DE COMMANDER UNE PRESSION DE COMMANDE

(30) Priority: 07.06.2004 SE 0401438
(43) Date of publication of application: 28.03.2007
(73) Proprietor: Scania CV Aktiebolag (publ), 151 87 Södertälje (SE)
(72) Inventor: ARNE, Johnny, S-151 45 Södertälje (SE)
(86) International application number: PCT/SE2005/000791
(87) International publication number: WO 2005/120918

(56) References cited:
- EP-A2- 0 548 881
- US-A- 5 560 688
- PATENT ABSTRACTS OF JAPAN vol. 1998, no. 04 31 March 1998 & JP 09 328 063 A (NEC HOME ELECTRON LTD ET AL) 22 December 1997

## Description

### Background

### 1. Technical field

The present invention relates to a method according to the introductory portion of the attached claim 1, which is disclosed in US-A-3402972.

The invention also relates to a device according to the introductory portion of the attached claim 11, which is disclosed in US-A-3402972.

### 2. Description of state of the art

A known practice, inter alia in trucks, is to use extra brake devices in the form of so-called retarders of a hydrodynamic kind and exhaust brakes of a compression type. In both cases the braking action is settable by means of a control pressure which therefore has to be regulated for control of the braking action. A lever, pedal or similar control device used by the operator to cause proportional valves to act in order to regulate the control pressure is known. Such valves are expensive and not always sufficiently precise, so desired control of braking action is difficult to achieve in the applications here concerned.

Also known in the case of trucks are so-called automatic clutch systems in semiautomatic gearchange systems, which constitute a further type of pressure-controlled object with control pressure regulation. Such control pressure regulation entails very high requirements with regard to speed and precision, requirements which it is difficult for today's regulating systems with proportional valves to meet.

The object of the present invention is to provide a method and a device for regulating the control pressure of a pressure-controlled object which provide better precision, greater speed and lower costs than the state of the art.

### Summary of the invention

The above object is achieved by what is indicated in the independent claims.

Further advantages are achieved by what is indicated in the respective dependent claims.

### Brief description of the drawings

The invention is described in more detail below with reference to embodiments and the attached drawings, in which
- Fig. 1 depicts schematically a first embodiment of an on/off regulating system according to the invention, e.g. for a hydrodynamic retarder, and also comprises an example of a sequence diagram,
- Fig. 2 depicts schematically a second embodiment of an on/off regulating system according to the invention, e.g. for a pneumatic exhaust brake, and also comprises an example of a sequence diagram,
- Fig. 3 depicts schematically a third embodiment of an on/off regulating system according to the invention, e.g. for a so-called automatic clutch, and also comprises an example of a sequence diagram, and
- Fig. 4 schematically depicts in the form of the sequence diagram according to Fig. 3 a predictive control algorithm for an on/off regulating system and also comprises a detail from the sequence diagram.

### Detailed description of preferred embodiments

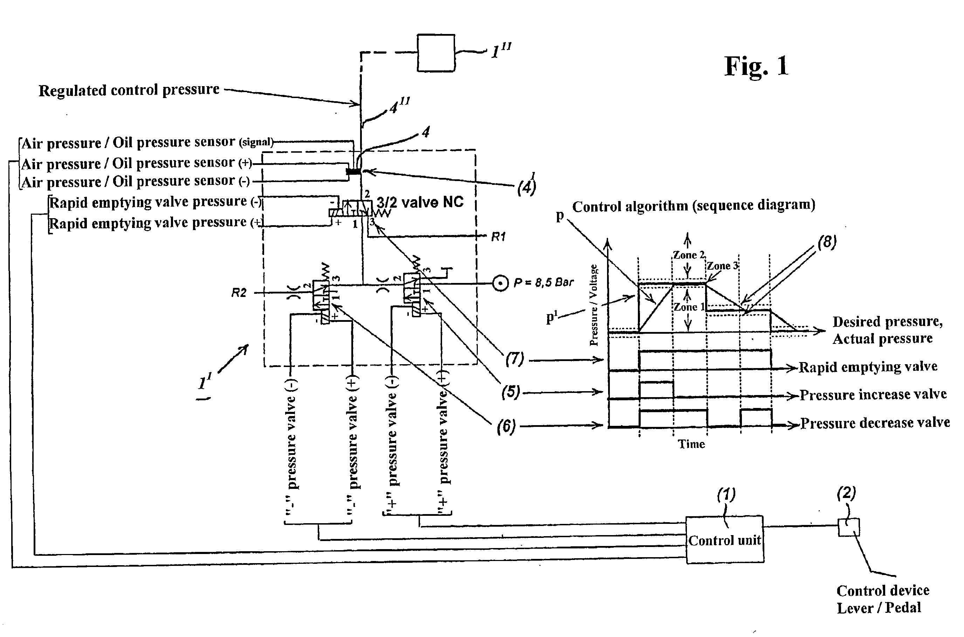

The device depicted in Fig. 1 for regulating the control pressure of a vehicle brake device 1", e.g. a so-called retarder, comprises a control unit 1 via which a control device 2 adapted, where appropriate, to being acted upon by an operator, is arranged to regulate, by means of a valve arrangement 1' said control pressure and hence the braking action of the brake device, i.e. braking moment/braking effect, said braking action being usually substantially proportional to the regulated control pressure at a specified vehicle speed.

Ref. 4 denotes a pressure sensor arranged to measure at a regulating point 4' in a control pressure line 4" between the brake device and the valve arrangement a currently regulated control pressure, an actual control pressure, and to emit to the control unit signals corresponding to the measured actual control pressure.

The control unit is arranged to compare the actual control pressure with a desired control pressure value p', preferably intended to be generated by the control unit on the basis of signals from the control device corresponding to the latter's position resulting from the operator's or equivalent action, whereby the actual control pressure p is intended to be regulated towards the desired control pressure p' on the basis of the result of the comparison, by means respectively of a pressure increase valve 5 of on/off type and of a pressure decrease valve 6 of on/off type, whereby the respective valves 5, 6 may therefore assume an open or closed state.

The two valves are connected to the control pressure line 4", whereby the pressure increase valve 5 is connected to a source P of pressure medium at a preferably specified pressure and whereby the pressure decrease valve is connected to a pressure medium outlet R2. The state of the valves is regulated by control means of a known, e.g. electromagnetic, kind for switching between the on and off states. A rapid emptying valve 7 of on/off type for quickly lowering the control pressure in response to signals from the control unit is arranged in the control pressure line, preferably between the regulating point and the pressure increase and pressure decrease valves.

Pressure raising and lowering are intended to be activated by the control unit on the basis of said comparison, whereby the pressure increase valve is adapted to opening upon activation of pressure raising so that pressure medium is supplied from the source P, thereby raising the pressure at the regulating point, and whereby the pressure decrease valve is adapted to closing upon activation of lowering of the control pressure, whereby discharge of pressure medium, i.e. venting, takes place via the outlet R2, thereby reducing the pressure at the regulating point.

In addition, according to preferred embodiments, the control unit is adapted, as schematically indicated in the sequence diagram in Fig. 1, to take into account appropriate regulating tolerance 8 in said comparisons, whereby the control unit is adapted to activating raising of the control pressure if the actual control pressure is lower than the desired control pressure minus chosen regulating tolerance, Zone 1, and whereby the control unit is adapted to activating lowering of the control pressure if the actual control pressure is higher than the desired control pressure plus chosen regulating tolerance, Zone 2. When the actual control pressure is within the regulating tolerance relative to the desired control pressure, Zone 3, the pressure increase valve is adapted to being kept closed and the pressure decrease valve open, whereby the control pressure at the regulating point is intended to be maintained.

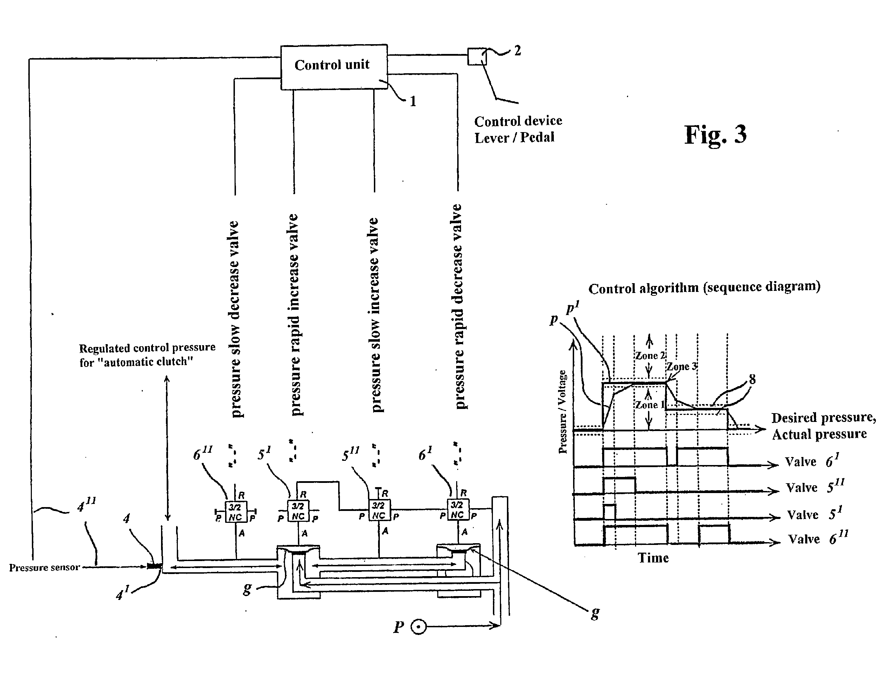

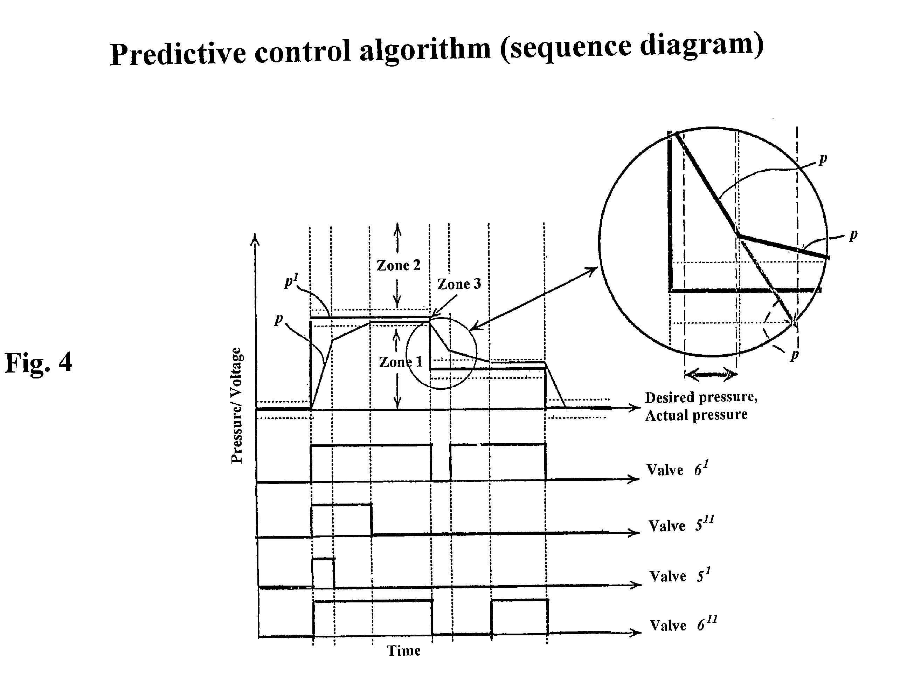

It is also preferred that the pressure sensor and the control unit be arranged in a detection loop, not depicted, in which the pressure at the regulating point is continuously detected at preferably specified frequency for said comparison. In such a case it is preferred that the control unit be arranged to forecast by means of a predictive control algorithm, as described in more detail in relation to Figs. 3 and 4, the pressure trend at the regulating point on the basis of previously detected actual control pressure values resulting from previous pressure change steps, whereby the regulation is adapted to the available regulating configuration whereby such magnitudes as pressurised volume, supply pressure from the source P to the regulating configuration and the flow cross-section area of the respective pressure regulating valves 5, 6 are taken into account.

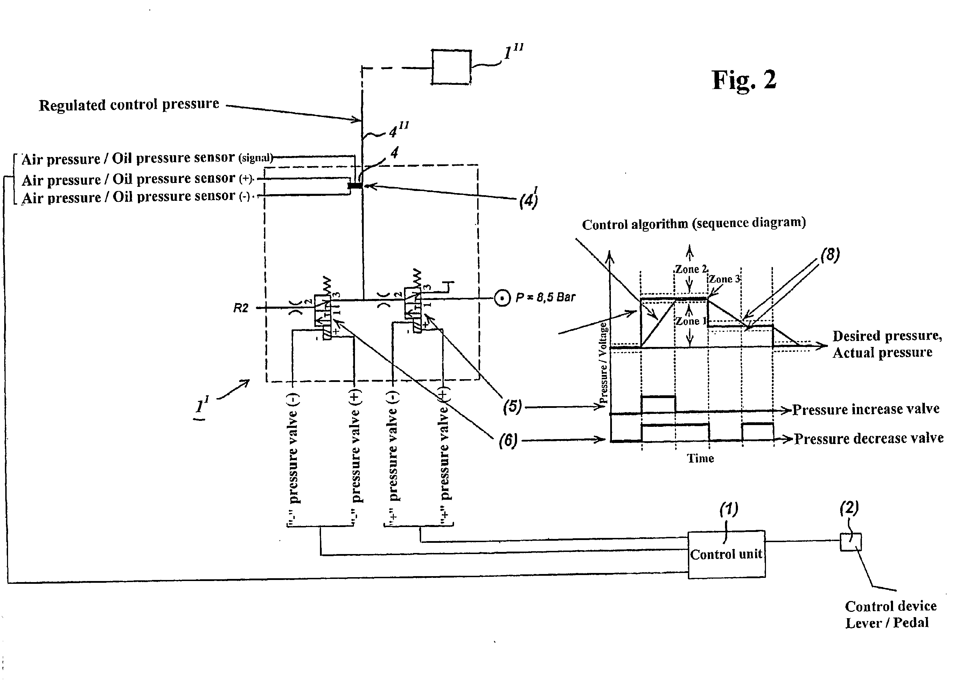

The regulating system depicted in Fig. 2 with on/off valves is intended, for example, for a pneumatically controlled exhaust brake with damper, whereby the regulating system has a schematic structure according to Fig. 1 but whereby there is no rapid emptying valve 7 when the regulating range in the form of damper angle is extraordinarily limited.

The regulating system depicted in Fig. 3, likewise with on/off valves, is intended, e.g. for a so-called automatic clutch, i.e. an application which requires very quick and very precise regulation. In this case the regulating system is adapted to using a predictive control algorithm, as previously mentioned, and comprises a pressure rapid increase valve 5' for rapid pressure increase, a pressure slow increase valve 5" for slow pressure increase, a pressure rapid decrease valve 6' for rapid pressure decrease and a pressure slow decrease valve 6" for slow pressure decrease.

The two pressure rapid change valves 5', 6' are each provided with their respective booster membrane 9, as depicted in Fig. 3, in a conventional manner.

By means of the predictive control algorithm of the control unit it is intended to be possible for the actual control pressure to be altered by a combination of control pressure change steps that are quick and slow, i.e. large and small per unit time, whereby the regulating system is adapted to detecting the actual value of the control pressure in loops at a specified frequency, e.g. 100 Hz, and to take the result of each pressure change step into account before the control unit takes a decision about the next step. In this context, pressure change is intended to take place in rapid steps so long as there is room to avoid passing in the next step the desired value plus or minus respectively the current regulating tolerance, i.e. without resulting in excessive fluctuation. When rapid change has been fully used, fine adjustment towards the desired control pressure is intended to take place in slow pressure change steps, as illustrated for example in the sequence diagram in Fig. 3.

Largely the same is illustrated by the sequence diagram in Fig. 4.

The regulating system according to Figs. 3 and 4 is arranged so that during rapid pressure increase the pressure rapid increase valve 5' and the pressure slow increase valve 5" are open, and during slow pressure increase the pressure rapid increase valve 5' is closed and the pressure slow increase valve 5" is open. During rapid pressure decrease, the pressure rapid decrease valve 6' and the pressure slow decrease valve 6" are closed, activated, and during slow pressure decrease the pressure rapid decrease valve is open, deactivated, and the pressure slow decrease valve is closed, activated.

The magnified detail depicted on the right in Fig. 4 is intended to illustrate a case where the next rapid pressure change step, in this case a rapid pressure decrease step, represented by broken lines, would cause the control pressure to fall below the desired control pressure minus the regulating tolerance. This condition is intended to be detected by the control unit's prediction whereby the pressure rapid decrease valve is deactivated upon signal from the control unit and a continuing pressure decrease is intended to be effected only by the pressure slow decrease valve.

The devices depicted are preferably based on pneumatics whereby the pressure is air pressure and the valves are pneumatic valves. However, the devices may be based on hydraulics and the pressure may be hydraulic pressure and the valves hydraulic valves. A combination of pneumatics and hydraulics is also conceivable.

It is also preferred that the device, the pressure-controlled object, for application of the invention comprises a hydrodynamic so-called retarder or an exhaust brake of compression type as supplementary vehicle brake, or comprises a so-called automatic clutch, whereby the invention in all cases concerns control pressure regulation.

The method and also the function of the device according to the invention are probably substantially indicated above. The control pressure is thus measured before the object, and regulation towards a desired control pressure generated by a control device via the control unit is effected by a comparing control unit and on/off valves for raising, lowering or maintaining the regulated control pressure. The control device need not necessarily be activated by an operator, as an arrangement is conceivable whereby activation takes place automatically as part of a comprehensive control system. Arrangements are also conceivable whereby the control unit is automatically and directly supplied with desired-value information in the form of signals as part of a comprehensive control system.

The precision performance of the device is determined by the longer of the following times:
- on the one hand, the opening and closing times of the regulating valves
- on the other hand, the decision time of the electronic control unit, the so-called sample frequency, which time in combination with the supply pressure and the flow cross-section area of active valves results in a minimum settable raising or lowering of the regulating pressure. In practice this precision 8 is about ± 0.05 to 0.1 bar.

The sequence diagrams provided by way of examples illustrate valve activity during a momentary raising of the desired control pressure corresponding to connecting the object for specified action, and during a momentary lowering of the desired control pressure to a lower specified action, and finally a disconnection of the object. All three changes result in ramp response of the regulated actual control pressure.

Compared with the state of the art, the invention provides inter alia
- simple and robust construction,
- high resistance to disturbances, high precision and, where applicable, great speed,
- facilities for diagnosing incorrect behaviour both of the regulating system and of the object concerned, and
- low component cost.

The invention has been described above in relation to preferred embodiments. Further embodiments are naturally conceivable, as also minor changes and additions, without departing from the fundamental concept of the invention.

The invention is therefore not to be regarded as limited to the embodiments described above but may be varied within its scope indicated by the attached claims.

## Claims

1. A method for regulating the control pressure of an object regulated by pressure control, which regulated object (1') comprises a so-called hydrodynamic retarder, a pneumatic exhaust brake or a so-called automatic clutch, whereby the control pressure and hence the object's action are regulated via a control unit and a valve arrangement, comprising the steps of
- measuring current control pressure (p), an actual control pressure, by means of a pressure sensor (4);
- the control unit (1) comparing the current control pressure with a desired control pressure (p') corresponding to desired action of the object;
- regulating the actual control pressure, on the basis of the results of the comparison, towards the desired control pressure **characterised in that** the regulation is effected by means of a valve arrangement of ON/OFF-type comprising a pressure rapid increase valve (5') and a pressure slow increase valve (5") and a pressure rapid decrease valve (6') and a pressure slow decrease valve (6"), and that the pressure sensor and the control unit are arranged in a detection loop in which the pressure (p) at the regulating point is detected at a specified frequency for said comparison and **in that** forecasting of the pressure trend at the regulating point is effected according to a predictive control algorithm by means of the control unit on the basis of previously detected actual control pressure values, whereby the regulation is adapted to the current regulating configuration.

2. A method according to claim 1, **characterised in that** rapid decrease of the control pressure is effected by means of a rapid emptying valve (7) of on/off type.

3. A method according to claim 1 or 2, **characterised in that** said comparison takes a regulating tolerance (8) into account.

4. A method according to claim 1 or 2, **characterised in that** in situations where the actual control pressure is lower than the desired control pressure minus the regulating tolerance, at least one pressure increase valve opens, thereby raising the pressure at the regulating point.

5. A method according to claim 1, 2, 3 or 4, **characterised in that** in situations where the actual control pressure is higher than the desired control pressure plus the regulating tolerance, at least one pressure decrease valve is activated so that venting is initiated, thereby reducing the pressure at the regulating point.

6. A method according to claim 1, 2, 3, 4 or 5, **characterised in that** in situations where the actual control pressure is within the regulating tolerance, available pressure increase valves are kept closed and available pressure decrease valves are deactivated, thereby maintaining the pressure at the regulating point.

7. A method according to claim 1, **characterised in that** raising the actual control pressure is effected by a pressure rapid increase valve (5') and/or a pressure slow increase valve (5").

8. A method according to claim 1 or 7, **characterised in that** lowering the actual control pressure is effected by a pressure rapid decrease valve (6') and/or a pressure slow decrease valve (6").

9. A method according to claim 7 or 8, **characterised in that** available pressure rapid change valves (5', 6') are provided with so-called booster membranes (9).

10. A method according to claim 7, 8 or 9, **characterised in that** rapid regulation of the actual control pressure towards the desired control pressure is effected according to the predictive control algorithm by initial rapid alteration of the actual control pressure by means preferably of both pressure rapid change valves and pressure slow change valves activated and by a concluding slow alteration of the actual control pressure by means solely of pressure slow change valves activated so that the desired control pressure is reached without excessive fluctuations.

11. A device for regulating the control pressure of an object regulated by pressure control, said regulated object (1') comprises a so-called hydrodynamic retarder, a pneumatic exhaust brake or a so-called automatic clutch, whereby the control pressure and hence the object's action are regulated via a control unit and a valve arrangement, an available pressure sensor (4) is adapted to measuring current control pressure (p), i.e. an actual control pressure, and that the control unit (1) is adapted to comparing the actual control pressure with a desired control pressure (p') corresponding to desired action of the object, whereby the actual control pressure is intended to be regulated towards the desired control pressure, on the basis of the result of the comparison, by means of the valve arrangement **characterised in that** the valve arrangement comprises valves of the ON/OFF-type including a pressure rapid increase valve (5') and a pressure slow increase valve (5") and a pressure rapid decrease valve (6') and a pressure slow decrease valve (6"), the pressure sensor (4) and the control unit (1) are arranged in a detection loop in which the pressure at the regulating point (4') is continuously detected at preferably specified frequency for said comparison and that the control unit is adapted to forecasting according to a predictive control algorithm the pressure trend at the regulating point on the basis of previously detected actual control pressure values, whereby the regulation is adapted to the available regulating configuration.

12. A device according to claim 11, **characterised in that** a rapid emptying valve (7) of on/off type is provided for rapid lowering of the control pressure.

13. A device according to claim 11 or 12, **characterised in that** the control unit is adapted to taking a suitable regulating tolerance (8) into account in said comparisons, whereby the control unit (1) is adapted to activating raising of the control pressure if the actual control pressure is lower than the desired control pressure minus the regulating tolerance, and to activating lowering of the control pressure if the actual control pressure is higher than the desired control pressure plus the regulating tolerance.

14. A device according to claim 11, 12 or 13, **characterised in that** at least one pressure increase valve (5, 5', 5") is adapted to opening upon activation of raising of control pressure, whereby the pressure is intended to be raised at the regulating point.

15. A device according to claim 11, 12, 13 or 14, **characterised in that** at least one pressure decrease valve (6, 6', 6") is adapted to being activated upon activation of lowering of the control pressure, thereby initiating venting, whereby the pressure is intended to be lowered at the regulating point.

16. A device according to claim 11, 12, 13, 14 or 15, **characterised in that** when the actual control pressure is within the regulating tolerance relative to the desired control pressure, the pressure increase valve is adapted to being kept closed and the pressure decrease valve is deactivated, whereby the pressure at the regulating point is intended to be maintained.

17. A device according to claim 11, **characterised in that** raising the actual control pressure is intended to be effected by a pressure rapid increase valve (5') and/or a pressure slow increase valve (5").

18. A device according to claim 11 or 17, **characterised in that** lowering the actual control pressure is intended to be effected by a pressure rapid decrease valve (6') and/or a pressure slow decrease valve (6").

19. A device according to claim 17 or 18, **characterised in that** available pressure rapid change valves (5', 6') are provided with so-called booster membranes (9).

20. A device according to claim 17, 18 or 19, **characterised in that** rapid regulation of the actual control pressure towards the desired control pressure is effected according to the predictive control algorithm by initial rapid alteration of the actual control pressure by means preferably of both pressure rapid change valves and pressure slow change valves activated and by a concluding slow alteration of the actual control pressure by means solely of pressure slow change valves activated so that the desired control pressure is reached without excessive fluctuations.

21. A device according to any one of claims 11-20, **characterised by** being based on pneumatics, whereby the pressure is air pressure and the valves are pneumatic valves.

## Patentansprüche

1. Verfahren zum Regeln des Steuerdrucks einer Vorrichtung, die von einer Drucksteuerung geregelt wird, wobei die geregelte Vorrichtung (1') einen sogenannten hydrodynamischen Retarder, eine pneumatische Abgasbremse oder eine sogenannte automatische Kupplung umfasst, wobei der Steuerdruck und damit die Funktionsweise der Vorrichtung über eine Steuereinheit und eine Ventilanordnung geregelt werden, umfassend die Schritte:
- Messen eines gegenwärtigen Steuerdrucks (p), d.h. eines aktuellen Steuerdrucks mittels eines Drucksensors (4);
- wobei die Steuereinheit (1) den gegenwärtigen Steuerdruck mit einem Sollsteuerdruck (p') vergleicht, die zu der beabsichtigten Funktionsweise der Vorrichtung korrespondiert;
- Regeln des aktuellen Steuerdrucks auf Grundlage der Ergebnisse des Vergleichs mit dem Sollsteuerdruck,
**dadurch gekennzeichnet, dass** die Regelung mittels einer Ventilanordnung des An/Aus-Typ bewirkt wird, die ein schnell wirkendes Druckanstiegsventil (5) und ein langsam wirkendes Druckanstiegsventil (5") sowie ein schnell wirkendes Druckreduzierungsventil (6') und ein langsam wirkendes Druckreduzierungsventil (6') umfasst, und dass der Drucksensor und die Steuereinheit in einer Erfassungsschleife angeordnet sind, in der der Druck (p) an der Regelstelle mit einer bestimmten Frequenz für den Vergleich erfasst wird, und dass die Drucktendenz an der Regelstelle gemäß einem Prädiktionsteueralgorithmus mittels der Steuereinheit auf Grundlage vorher erfasster aktueller Steuerdruckwerte bewirkt wird, wobei die Regelung an die aktuelle Regelkonfiguration angepasst ist.

2. Verfahren nach Anspruch 1, **dadurch gekennzeichnet, dass** eine schnelle Reduzierung des Steuerdrucks mittels eines schnell wirkenden Entlastungsventils (7) des Ein/Aus-Typ bewirkt wird.

3. Verfahren nach Anspruch 1 oder 2, **dadurch gekennzeichnet, dass** der Vergleich eine Regelungstoleranz (8) berücksichtigt.

4. Verfahren nach einem der Ansprüche 1 oder 2, **dadurch gekennzeichnet, dass** in Situationen, in denen der aktuelle Steuerdruck niedriger als der Sollsteuerdruck minus der Regeltoleranz ist, wenigstens ein Druckerhöhungsventil öffnet, wodurch der Druck an der Regelstelle ansteigt.

5. Verfahren nach Anspruch 1, 2, 3 oder 4, **dadurch gekennzeichnet, dass** in Situationen, in denen der aktuelle Steuerdruck größer ist als der Sollsteuerdruck plus der Regeltoleranz wenigstens eine der Druckreduzierungsventile aktiviert wird, sodass eine Entlüftung eingeleitet wird, wodurch der Druck an der Regelstelle reduziert wird.

6. Verfahren nach Anspruch 1, 2, 3, 4 oder 5, **dadurch gekennzeichnet, dass** in Situationen, in denen der aktuelle Steuerdruck innerhalb der Regeltoleranz liegt, verfügbare Druckerhöhungsventile geschlossen gehalten werden und verfügbare Druckreduzierungsventile deaktiviert werden, wodurch der Druck an der Regelstelle beibehalten wird.

7. Verfahren nach Anspruch 1, **dadurch gekennzeichnet, dass** das Anheben des aktuellen Steuerdrucks durch ein schnell wirkendes Druckerhöhungsventil (5') und/oder ein langsam wirkendes Druckerhöhungsventil (5") bewirkt wird.

8. Verfahren nach Anspruch 1 oder 7, **dadurch gekennzeichnet, dass** das Absenken des aktuellen Steuerdrucks durch ein schnell wirkendes Druckreduzierungsventil (6') und/oder ein langsam wirkendes Druckreduktierungsventil (6") bewirkt wird.

9. Verfahren nach Anspruch 7 oder 8, **dadurch gekennzeichnet, dass** verfügare schnellwirkende Druckänderungsventile (5', 6') mit sogenannten Boostermembranen (9) versehen sind.

10. Verfahren nach Anspruch 7, 8 oder 9, **dadurch gekennzeichnet, dass** die schnelle Regelung des aktuellen Steuerdrucks auf dem Sollsteuerdruck nach Maßgabe des prädiktiven Steueralgorithmus mittels einer anfangs schnellen Änderung des aktuellen Steuerdrucks durch Aktivierung vorzugsweise sowohl der schnell wirkenden Druckänderungsventile als auch der langsam wirkenden Druckänderungsventile bewirkt wird und durch Beenden einer langsamen Änderung des aktuellen Steuerdrucks mittels lediglich einer Aktivierung der langsam wirkenden Druckänderungsventile, sodass der Sollsteuerdruck ohne übermäßige Schwankungen erreicht wird.

11. Vorrichtung zum Regeln des Steuerdrucks einer von einer Drucksteuerung geregelten Vorrichtung, wobei die geregelte Vorrichtung (1') einen sogenannten hydronynamischen Retarder , eine pneumatische Abgasbremse oder eine sogenannte automatische Kupplung umfasst, wobei der Steuerdruck und damit die Funktionsweise der Vorrichtung über eine Steuereinheit und eine Ventilanordnung geregelt werden, wobei ein verfügbarer Drucksensor (4) dazu ausgelegt ist, um einen gegenwärtigen Steuerdruck (p), d.h. einen aktuellen Steuerdruck, zu messen, und dass die Steuereinheit (1) dazu ausgelegt ist, den aktuellen Steuerdruck mit einem Sollsteuerdruck (p') zu vergleichen, der zu der gewünschten Betriebsweise der Vorrichtung korrespondiert, wobei vorgesehen ist, dass der aktuelle Steuerdruck auf den Sollsteuerdruck mittels der Ventilanordnung auf Grundlage des Ergebnisses des Vergleichs geregelt wird,
**dadurch gekennzeichnet, dass** die Ventilanordnung Ventile des An/Aus-Typs umfasst, die ein schnellwirkendes Druckerhöhungsventil (5') und ein langsam wirkendes Druckerhöhungsventil (5") und ein schnellwirkendes Druckreduzierungsventil (6') und ein langsam wirkendes Druckreduzierungsventil (6") umfassen, wobei der Drucksensor (4) und die Steuereinheit (1) in einer Erfassungsschleife angeordnet sind, in der der Druck an der Regelstelle (4') kontinuierlich mit einer bevorzugten spezifizierten Frequenz für den Vergleich erfasst wird, und dass die Steuereinheit dazu ausgelegt ist, nach Maßnahme eines prädiktiven Steueralgorithmus die Drucktendenz an der Regelstelle auf Grundlage von vorangehend erfassten aktuellen Steuerdruckwerten vorher zu bestimmen, wobei die Regelung an die verfügbare Regelungskonfiguration angepasst ist.

12. Vorrichtung nach Anspruch 11, **dadurch gekennzeichnet, dass** ein schnell wirkendes Entlüftungsventil (7) des An/Aus-Typs für eine schnelle Absenkung des Steuerdrucks vorgesehen ist.

13. Vorrichtung nach Anspruch 11 oder 12, **dadurch gekennzeichnet, dass** die Steuereinheit dazu ausgelegt ist, eine geeignete Regeltoleranz (8) bei den Vergleichen zu berücksichtigen, wobei die Steuereinheit (1) dazu ausgelegt ist, das Anheben des Steuerdrucks zu veranlassen, wenn der aktuelle Steuerdruck niedriger als der Sollsteuerdruck minus der Regeltoleranz ist, und das Absenken des Steuerdrucks zu veranlassen, wenn der aktuelle Steuerdruck höher als der Sollsteuerdruck plus die Regeltoleranz ist.

14. Vorrichtung nach Anspruch 11, 12 oder 13, **dadurch gekennzeichnet, dass** wenigstens ein Druckanstiegsventil (5, 5', 5") dazu ausgelegt ist, nach einer Aktivierung zum Anheben des Steuerdrucks zu öffnen, wobei der Druck an der Regelstelle angehoben werden soll.

15. Vorrichtung nach Anspruch 11, 12, 13 oder 14, **dadurch gekennzeichnet, dass** wenigstens ein Druckreduzierungsventil (6, 6', 6") dazu ausgelegt ist, nach einer Aktivierung eines Absenkens des Steuerdrucks aktiviert zu werden, wodurch eine Entlüftung veranlasst wird, wobei der Druck an der Regelstelle abgesenkt werden soll.

16. Vorrichtung nach Anspruch 11, 12, 13, 14 oder 15, **dadurch gekennzeichnet, dass** dann, wenn der aktuelle Steuerdruck innerhalb der Regeltoleranz relativ zu dem Sollsteuerdruck liegt, das Druckanstiegsventil dazu ausgelegt ist, geschlossen gehalten zu werden, und das Druckabsenkungsventil deaktiviert wird, wodurch der Druck an der Regelstelle beibehalten werden soll.

17. Vorrichtung nach Anspruch 11, **dadurch gekennzeichnet, dass** vorgesehen ist, dass das Anheben des aktuellen Steuerdrucks durch ein schnell wirkendes Druckanstiegsventil (5') und/oder durch ein langsam wirkendes Druckanstiegsventil (5") bewirkt wird.

18. Vorrichtung nach Anspruch 11 oder 17, **dadurch gekennzeichnet, dass** vorgesehen ist, dass das Absenken des aktuellen Steuerdrucks durch ein schnell wirkendes Druckabsenkungsventil (6') und/oder ein langsam wirkendes Druckabsenkungsventil (6") bewirkt wird.

19. Vorrichtung nach Anspruch 17 oder 18, **dadurch gekennzeichnet, dass** verfügbare schnell wirkende Druckänderungsventile (5', 6') mit sogenannten Boostermembranen (9) versehen sind.

20. Vorrichtung nach Anspruch 17, 18 oder 19, **dadurch gekennzeichnet, dass** eine schnelle Regelung des aktuellen Steuerdrucks auf den Sollsteuerdruck nach Maßgabe prädiktiven Steueralgorithmus durch anfangs schnelle Veränderung des aktuellen Steuerdrucks mittels bevorzugt beider schnell wirkenden Druckänderungsventile und aktivierter langsam wirkender Druckänderungsventile erzielt wird, und durch Beenden der langsamen Änderung des aktuellen Steuerdrucks mittels einer Aktivierung lediglich der langsam wirkenden Druckänderungsventil, sodass der Sollsteuerdruck ohne übermäßige Schwankungen erreicht wird.

21. Vorrichtung nach einem der Ansprüche 11 bis 20, **dadurch gekennzeichnet, dass** sie auf Pneumatik beruht, wobei der Druckluftdruck und die Ventile pneumatischen Ventile sind. 70344

## Revendications

1. Procédé pour réguler la pression de commande d'un objet régulé par une commande par pression, cet objet régulé (1') comprenant ce que l'on appelle un retardateur hydrodynamique, un frein sur échappement pneumatique ou ce que l'on appelle un embrayage automatique, la pression de commande, et, par conséquent, l'action de l'objet, étant régulées par l'intermédiaire d'une unité de commande et d'un agencement de vannes, comprenant les étapes consistant à :
- mesurer une pression de commande actuelle (p), une pression de commande réelle, à l'aide d'un capteur de pression (4) ;
- l'unité de commande (1) comparant la pression de commande actuelle à une pression de commande souhaitée (p') correspondant à l'action souhaitée de l'objet ;
- réguler la pression de commande réelle, en fonction des résultats de la comparaison, en direction de la pression de commande souhaitée, **caractérisé en ce que** la régulation est effectuée à l'aide d'un agencement de vannes du type MARCHE/ARRET comprenant une vanne d'augmentation rapide de pression (5') et une vanne d'augmentation lente de pression (5") et une vanne de diminution rapide de pression (6') et une vanne de diminution lente de pression (6"), et **en ce que** le capteur de pression et l'unité de commande sont disposés dans une boucle de détection dans laquelle la pression (p) au point de régulation est détectée à une fréquence spécifiée pour ladite comparaison, et **en ce qu'**une prévision de la tendance de pression au point de régulation est effectuée selon un algorithme de commande prédictif à l'aide de l'unité de commande en fonction de valeurs de pression de commande réelles précédemment détectées, la régulation étant ainsi adaptée à la configuration de régulation actuelle.

2. Procédé selon la revendication 1, **caractérisé en ce qu'**une diminution rapide de la pression de commande est effectuée à l'aide d'une vanne de vidage rapide (7) du type marche/arrêt.

3. Procédé selon la revendication 1 ou 2, **caractérisé en ce que** ladite comparaison tient compte d'une tolérance de régulation (8).

4. Procédé selon la revendication 1 ou 2, **caractérisé en ce que**, dans des situations dans lesquelles la pression de commande réelle est inférieure à la pression de commande souhaitée moins la tolérance de régulation, au moins une vanne d'augmentation de pression s'ouvre, pour ainsi élever la pression au point de régulation.

5. Procédé selon la revendication 1, 2, 3 ou 4, **caractérisé en ce que**, dans des situations dans lesquelles la pression de commande réelle est supérieure à la pression de commande souhaitée plus la tolérance de régulation, au moins une vanne de diminution de pression est activée, de telle sorte qu'une évacuation soit déclenchée, pour ainsi réduire la pression au point de régulation.

6. Procédé selon la revendication 1, 2, 3, 4 ou 5, **caractérisé en ce que**, dans des situations dans lesquelles la pression de commande réelle est à l'intérieur de la tolérance de régulation, les vannes d'augmentation de pression disponible sont maintenues fermées et les vannes de diminution de pression disponible sont désactivées, pour ainsi maintenir la pression au point de régulation.

7. Procédé selon la revendication 1, **caractérisé en ce que** l'élévation de la pression de commande réelle est effectuée par une vanne d'augmentation rapide de pression (5') et/ou par une vanne d'augmentation lente de pression (5").

8. Procédé selon la revendication 1 ou 7, **caractérisé en ce que** l'abaissement de la pression de commande réelle est effectué par une vanne de diminution rapide de pression (6') et/ou par une vanne de diminution lente de pression (6").

9. Procédé selon la revendication 7 ou 8, **caractérisé en ce que** les vannes de changement rapide de pression disponible (5', 6') sont munies de ce que l'on appelle des membranes de surpression (9).

10. Procédé selon la revendication 7, 8 ou 9, **caractérisé en ce qu'**une régulation rapide de la pression de commande réelle en direction de la pression de commande souhaitée est effectuée selon l'algorithme de commande prédictif par une modification rapide initiale de la pression de commande réelle, de préférence à l'aide tout à la fois des vannes de changement rapide de pression et des vannes de changement lent de pression qui sont activées, et par une modification lente finale de la pression de commande réelle à l'aide uniquement des vannes de changement lent de pression qui sont activées, de telle sorte que la pression de commande souhaitée soit atteinte sans fluctuations excessives.

11. Dispositif pour réguler la pression de commande d'un objet régulé par une commande par pression, ledit objet régulé (1') comprenant ce que l'on appelle un retardateur hydrodynamique, un frein sur échappement pneumatique ou ce que l'on appelle un embrayage automatique, la pression de commande, et, par conséquent, l'action de l'objet, étant régulées par l'intermédiaire d'une unité de commande et d'un agencement de vannes, un capteur de pression disponible (4) étant conçu pour mesurer une pression de commande actuelle (p), ou, autrement dit, une pression de commande réelle, et l'unité de commande (1) étant conçue pour comparer la pression de commande réelle à une pression de commande souhaitée (p') correspondant à une action souhaitée de l'objet, la pression de commande réelle devant être régulée en direction de la pression de commande souhaitée, en fonction du résultat de la comparaison, à l'aide de l'agencement de vannes, **caractérisé en ce que** l'agencement de vannes comprend des vannes du type MARCHE/ARRET comprenant une vanne d'augmentation rapide de pression (5') et une vanne d'augmentation lente de pression (5") et une vanne de diminution rapide de pression (6') et une vanne de diminution lente de pression (6"), **en ce que** le capteur de pression (4) et l'unité de commande (1) sont disposés dans une boucle de détection dans laquelle la pression au point de régulation (4') est détectée de façon continue à une fréquence de préférence spécifiée pour ladite comparaison, et **en ce que** l'unité de commande est conçue pour prévoir, selon un algorithme de commande prédictif, la tendance de pression au point de régulation en fonction de valeurs de pression de commande réelles précédemment détectées, la régulation étant ainsi adaptée à la configuration de régulation disponible.

12. Dispositif selon la revendication 11, **caractérisé en ce qu'**une vanne de vidage rapide (7) du type marche/arrêt est prévue pour un abaissement rapide de la pression de commande.

13. Dispositif selon la revendication 11 ou 12, **caractérisé en ce que** l'unité de commande est conçue pour tenir compte d'une tolérance de régulation appropriée (8) dans lesdites comparaisons, l'unité de commande (1) étant conçue pour activer l'élévation de la pression de commande si la pression de commande réelle est inférieure à la pression de commande souhaitée moins la tolérance de régulation, et activer l'abaissement de la pression de commande si la pression de commande réelle est supérieure à la pression de commande souhaitée plus la tolérance de régulation.

14. Dispositif selon la revendication 11, 12 ou 13, **caractérisé en ce qu'**au moins une vanne d'augmentation de pression (5, 5', 5") est conçue pour s'ouvrir lors de l'activation de l'élévation de la pression de commande, la pression devant être élevée au point de régulation.

15. Dispositif selon la revendication 11, 12, 13 ou 14, **caractérisé en ce qu'**au moins une vanne de diminution de pression (6, 6', 6") est conçue pour être activée lors de l'activation de l'abaissement de la pression de commande, pour ainsi déclencher une évacuation, la pression devant être abaissée au point de régulation.

16. Dispositif selon la revendication 11, 12, 13, 14 ou 15, **caractérisé en ce que**, lorsque la pression de commande réelle est à l'intérieur de la tolérance de régulation par rapport à la pression de commande souhaitée, la vanne d'augmentation de pression est conçue pour être maintenue fermée et la vanne de diminution de pression est désactivée, la pression au point de régulation devant être maintenue.

17. Dispositif selon la revendication 11, **caractérisé en ce qu'**il est prévu que l'élévation de la pression de commande réelle soit effectuée par une vanne d'augmentation rapide de pression (5') et/ou par une vanne d'augmentation lente de pression (5").

18. Dispositif selon la revendication 11 ou 17, **caractérisé en ce qu'**il est prévu que l'abaissement de la pression de commande réelle soit effectué par une vanne de diminution rapide de pression (6') et/ou par une vanne de diminution lente de pression (6").

19. Dispositif selon la revendication 17 ou 18, **caractérisé en ce que** les vannes de changement rapide de pression disponible (5', 6') sont munies de ce que l'on appelle des membranes de surpression (9).

20. Dispositif selon la revendication 17, 18 ou 19, **caractérisé en ce qu'**une régulation rapide de la pression de commande réelle en direction de la pression de commande souhaitée est effectuée selon l'algorithme de commande prédictif par une modification rapide initiale de la pression de commande réelle, de préférence à l'aide tout à la fois des vannes de changement rapide de pression et des vannes de changement lent de pression qui sont activées, et par une modification lente finale de la pression de commande réelle à l'aide uniquement des vannes de changement lent de pression qui sont activées, de telle sorte que la pression de commande souhaitée soit atteinte sans fluctuations excessives.

21. Dispositif selon l'une quelconque des revendications 11 à 20, **caractérisé en ce qu'**il est basé sur la pneumatique, la pression étant une pression d'air et les vannes étant des vannes pneumatiques.
